# EUROPEAN PATENT APPLICATION

(11) **EP 4 614 955 A1**
(43) Date of publication of application: **10.09.2025**
(21) Application number: 23901061.4
(22) Date of filing: 05.12.2023
(51) Int. Cl.: H04M 1/72412, G06F 3/0484, G06F 3/0481, G06F 1/26

(54) **ELECTRONIC DEVICE FOR DISPLAYING BATTERY INFORMATION AND METHOD OF OPERATING ELECTRONIC DEVICE**

(30) Priority: 06.12.2022 KR 20220169143; 12.01.2023 KR 20230004565
(71) Applicant: Samsung Electronics Co., Ltd., Suwon-si, Gyeonggi-do 16677 (KR)
(72) Inventor: SEO, Chanwook, Suwon-si, Gyeonggi-do 16677 (KR); KIM, Sangheon, Suwon-si, Gyeonggi-do 16677 (KR); KIM, Siyoung, Suwon-si, Gyeonggi-do 16677 (KR); LEE, Jaeho, Suwon-si, Gyeonggi-do 16677 (KR); JANG, Injae, Suwon-si, Gyeonggi-do 16677 (KR); JEON, Sanguk, Suwon-si, Gyeonggi-do 16677 (KR); CHOI, Yunjeong, Suwon-si, Gyeonggi-do 16677 (KR); HONG, Sangoh, Suwon-si, Gyeonggi-do 16677 (KR); LIM, Yeunwook, Suwon-si, Gyeonggi-do 16677 (KR)
(74) Representative: Nederlandsch Octrooibureau
(86) International application number: PCT/KR2023/019885
(87) International publication number: WO 2024/123042

(57) **Abstract**

An electronic device, according to various embodiments, comprises a communication module, a display, a memory that stores instructions, and a processor, wherein the instructions, when executed by the processor, can cause the electronic device to obtain battery information of one or more external electronic devices, analyze available usage time of the external electronic devices on the basis of the battery information of the one or more external electronic devices, determine an action to control the external electronic devices on the basis of the available usage time of the one or more external electronic devices, configure a widget on the basis of the battery information of the one or more external electronic devices and the action, and display the widget on the display. Various other embodiments are possible.

## Description

### Technical Field

Various embodiments disclosed herein relate to an electronic device for displaying battery information and an operating method of an electronic device.

### Background Art

A terminal may be connected to external electronic devices, such as a laptop computer, a watch, a digital door lock, a wireless fan, a car, a robot vacuum cleaner, a tablet PC, a VR/AR electronic device, a handheld vacuum cleaner, a stylus, earbuds, and/or a Smart Tag, by using wireless communication, and may transmit and receive various pieces of information to and from the external electronic device.

External electronic devices are registered in a server, and electronic devices with the same account may transmit and receive information through the server.

### Disclosure of Invention

### Technical Problem

A terminal may be connected to an external electronic device through a communication module, and may receive battery information about the external electronic device to display the battery information on a display. Conventionally, battery information about an external electronic device directly connected to the terminal is provided, but battery information about an external electronic device indirectly connected thereto is not provided. Further, conventionally, the terminal provides only information about the battery level of the external electronic device connected to the terminal.

An electronic device according to various embodiments of the disclosure may provide not only battery information about an external electronic device connected through a communication module but also battery information about an external electronic device connected through a server and/or an application.

Further, the electronic device according to various embodiments of the disclosure may analyze the available time of the external electronic device, based on the battery information about the external electronic device, and may determine an action to reduce battery consumption of the external electronic device.

In addition, the electronic device according to various embodiments of the disclosure may configure a widget, based on the battery information about the external electronic device and the action, and may display the widget on a display.

The technical subjects pursued in the disclosure may not be limited to the above-mentioned technical subjects, and other technical subjects which are not mentioned may be clearly understood from the following descriptions by those skilled in the art to which the disclosure pertains.

### Solution to Problem

An electronic device according to an embodiment may include a communication module, a display, a memory storing instructions, and a processor. The instructions may, when executed by the processor, cause the electronic device to obtain battery information about at least one external electronic device, analyze available time of the at least one external electronic device, based on the battery information about the external electronic device, determine an action to control the at least one external electronic device, based on the available time of the external electronic device, configure a widget, based on the battery information about the at least one external electronic device and the action, and display the widget on the display.

An operating method of an electronic device according to an embodiment may include obtaining battery information about a first external electronic device from the first external electronic device through a communication module with respect to the first external electronic device directly connected to the electronic device through the communication module, obtaining battery information about a second external electronic device from a server through the communication module with respect to the second external electronic device connected to the server, and obtaining battery information about a third external electronic device from an application with respect to the third external electronic device connected to the application.

### Advantageous Effects of Invention

For example, an electronic device may provide information about a battery of an external electronic device directly and/or indirectly connected to the electronic device.

For example, an electronic device may provide an action to reduce battery consumption of an external electronic device.

### Brief Description of Drawings

With regard to the description of the drawings, the same or like reference signs may be used to designate the same or like elements.
FIG. 1 is a block diagram of an electronic device in a network environment according to various embodiments;
FIG. 2A is a block diagram of an electronic device according to various embodiments;
FIG. 2B illustrates examples of an electronic device and an external electronic device according to various embodiments;
FIG. 3 is a flowchart illustrating a method in which a processor obtains battery information about an external electronic device and configures a widget according to various embodiments;
FIG. 4A illustrates an example of a widget that a processor displays on a display, based on battery information about an external electronic device according to various embodiments;
FIG. 4B illustrates an example of a widget that a processor displays on a display, based on battery information about an external electronic device according to various embodiments;
FIG. 4C illustrates an example of a widget that a processor displays on a display, based on battery information about an external electronic device according to various embodiments;
FIG. 5A illustrates an example of a widget that a processor displays on a display, based on battery information about an external electronic device according to various embodiments;
FIG. 5B illustrates an example of a widget that a processor displays on a display, based on battery information about an external electronic device according to various embodiments;
FIG. 5C illustrates an example of a widget that a processor displays on a display, based on battery information about an external electronic device according to various embodiments;
FIG. 6A illustrates an example in which an electronic device displays battery information about an external electronic device by using UWB communication according to various embodiments;
FIG. 6B illustrates an example in which an electronic device selects an external electronic device about which battery information is to be obtained by using UWB communication according to various embodiments;
FIG. 6C illustrates an example in which a processor obtains battery information about a sixth external electronic device by using UWB communication according to various embodiments;
FIG. 6D illustrates an example in which a processor obtains battery information about a seventh external electronic device by using UWB communication according to various embodiments;
FIG. 7 illustrates an example of a widget that a processor displays on a display, based on battery information about an external electronic device according to various embodiments;
FIG. 8 illustrates an example of a widget that a processor displays on a display, based on battery information about an external electronic device according to various embodiments;
FIG. 9 illustrates an example in which a processor configures a widget displayed on a display, based on battery information about an external electronic device according to various embodiments; and
FIG. 10 illustrates an example in which a processor configures a widget displayed on a display, based on battery information about an external electronic device according to various embodiments.

### Mode for the Invention

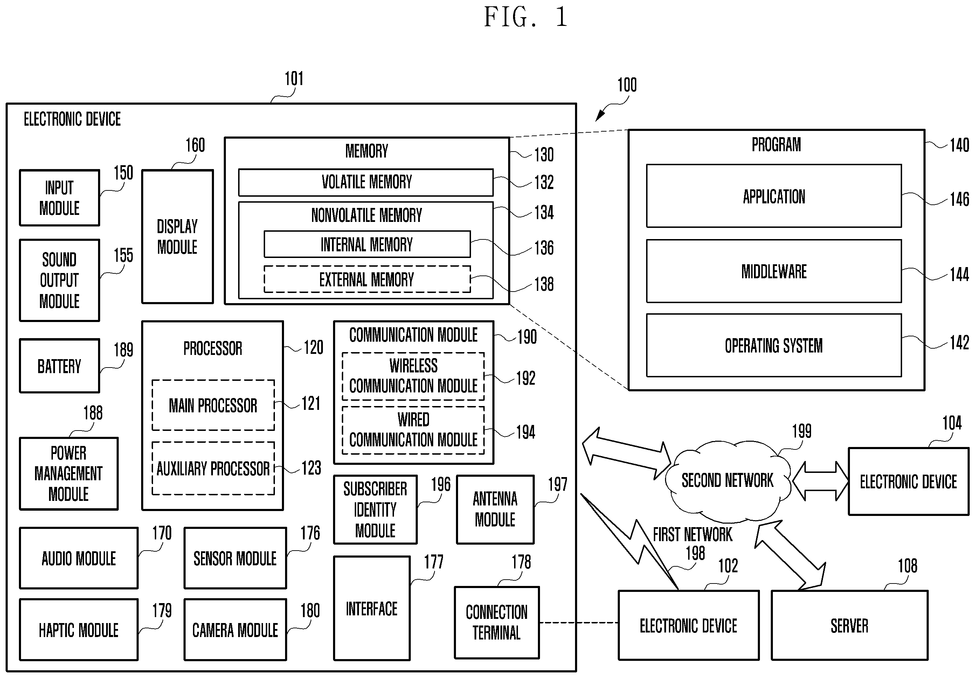

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. **In** another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

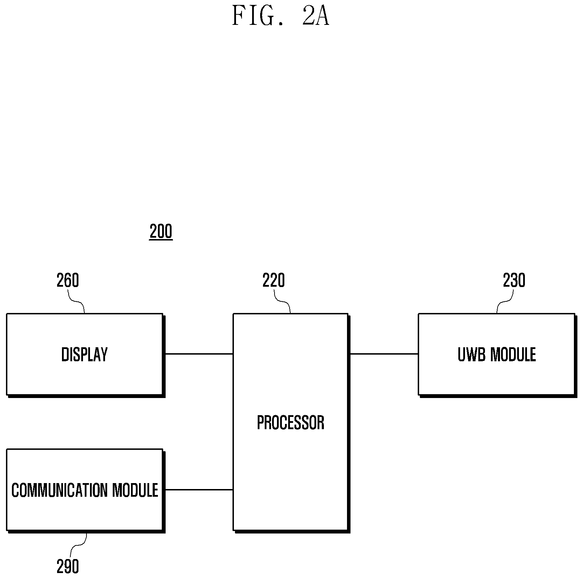

FIG. 2A is a block diagram of an electronic device 200 according to various embodiments.

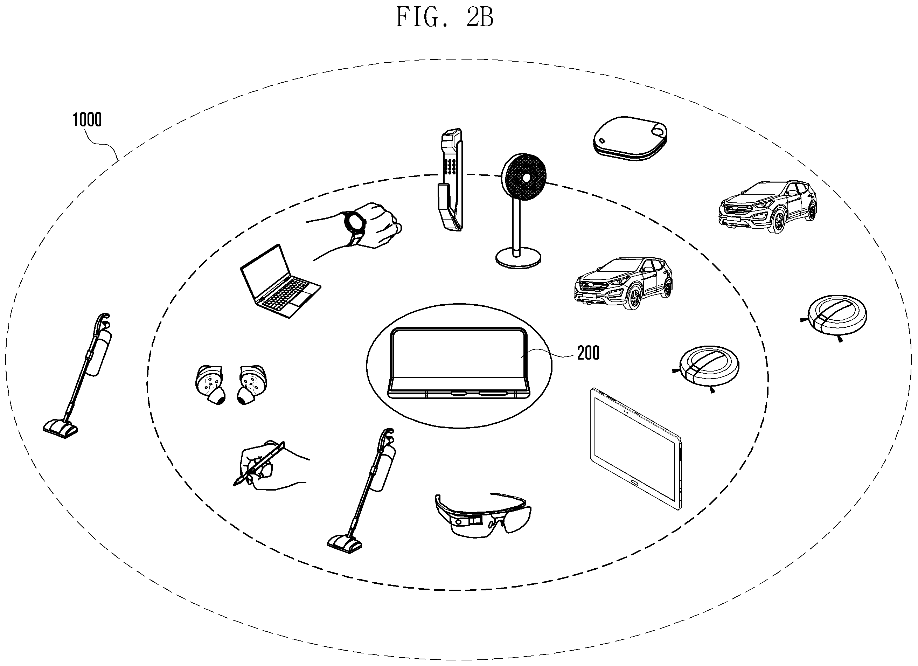

Referring to FIG. 2A, the electronic device 200 (e.g., the electronic device 101 of FIG. 1) may include a processor 220 (e.g., the processor 120 of FIG. 1), a display 260 (e.g., the display 160 of FIG. 1), a UWB module 230, and/or a communication module 290 (e.g., the communication module 190 of FIG. 1). The components included in FIG. 2 are some of the components included in the electronic device 200, and the electronic device 200 may also include various components as illustrated in FIG. 1.

The communication module 290 may communicate with at least one external electronic device through a network (e.g., the first network 198 and/or the second network 199 of FIG. 1) to receive and/or transmit various pieces of information. The processor 220 may be connected to the communication module 290 to process various pieces of information that the communication module 290 receives from the external electronic device. The processor 220 may control the communication module 290 to transmit various pieces of information to the external electronic device.

For example, the communication module 290 may receive battery information about the external electronic device 1000 from the connected external electronic device, or may receive the battery information of the external electronic device 1000 from a server.

The UWB module 230 may be a communication circuit that supports an ultra-wideband (UWB) wireless communication method. According to an embodiment, the processor 220 may obtain information related to the location of the external electronic device 1000 through the UWB module 230. According to an embodiment, the processor 220 may determine the direction in which the external electronic device is located, based on a communication signal between the UWB module 230 and the external electronic device 1000. For example, the processor 220 may determine the angle of arrival (AOA) of the signal obtained by an antenna included in the UWB module 230 from the external electronic device. For example, the processor 220 may determine the direction in which the external electronic device is located, based on phase difference of arrival (PDoA).

According to various embodiments, the processor 220 may analyze the available time of the external electronic device 1000, based on the battery information about the electronic device 200 and/or the external electronic device 1000.

According to various embodiments, the processor 220 may determine an action to control the electronic device 200 and/or the external electronic device 1000, based on the available time of the electronic device 200 and/or the external electronic device 1000.

According to various embodiments, the processor 220 may configure a widget, based on the battery information about the electronic device 200 and/or the external electronic device 1000 and the action about.

According to various embodiments, the processor 220 may display the widget related to a battery on the display 260. For example, the processor 220 may display the widget on at least a portion of the display 260. For example, the processor 220 may display the widget on the entire screen of the display 260. For example, the processor 220 may display a widget on one side of the screen. For example, the processor 220 may display the widget on a split screen.

FIG. 2B illustrates examples of an electronic device 200 and an external electronic device 1000 according to various embodiments.

According to an embodiment, the external electronic device 1000 may include a laptop computer, a watch, a digital door lock, a wireless fan, a car, a robot vacuum cleaner, a tablet PC, a VR/AR electronic device, a handheld vacuum cleaner, a stylus, earbuds, and/or a Smart Tag.

According to an embodiment, the external electronic device 1000 may be directly connected to the electronic device 200 through a communication module, and may transmit battery information about the external electronic device 1000 to the electronic device 200 through the communication module.

According to an embodiment, with respect to the external electronic device 1000 directly connected to the electronic device 200 through the communication module 290, the electronic device 200 may obtain the battery information about the external electronic device 1000 from the external electronic device 1000 through the communication module 290.

According to an embodiment, the external electronic device 1000 may be connected to a server, and may transmit the battery information about the external electronic device 1000 to the server.

According to an embodiment, with respect to the external electronic device 1000 connected to the server, the electronic device 200 may obtain the battery information about the external electronic device 1000 from the server through the communication module 290. For example, the processor 220 may obtain the battery information about the external electronic device 1000 registered in the server from the server after passing through a personal authentication procedure (e.g., a network-based account, biometric authentication, a password, a pattern, a voice, or an iris).

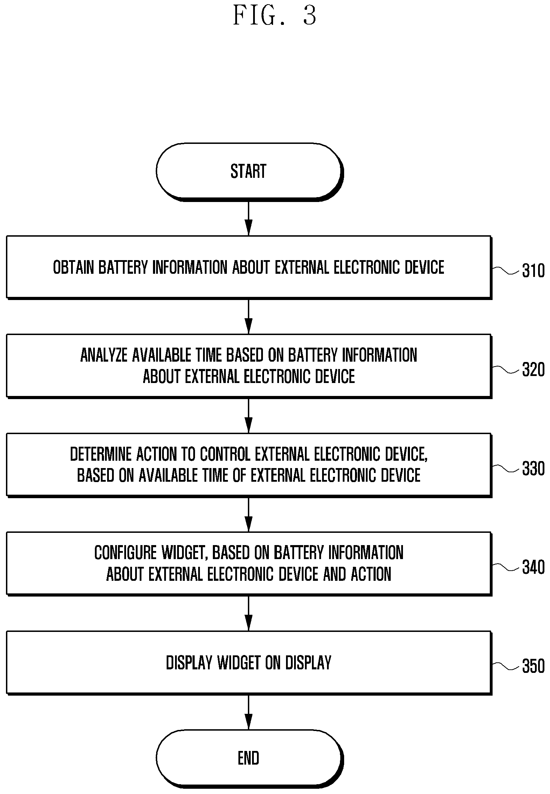

FIG. 3 is a flowchart illustrating a method in which a processor 220 obtains battery information about an external electronic device 1000 and configures a widget according to various embodiments.

**In** an embodiment, a memory 130 may store instructions including the method of obtaining the battery information about the external electronic device 1000 and configuring the widget of FIG. 3. The instructions stored in the memory 130 may, when executed by the processor 220, cause an electronic device 200 to perform the method of obtaining the battery information about the external electronic device 1000 and configuring the widget.

**In** an embodiment, a computer-readable recording medium may store a program to execute the method of obtaining the battery information about the external electronic device 1000 and configuring the widget.

According to an embodiment, in operation 310, the processor 220 may obtain battery information about the electronic device 200 and/or the external electronic device 1000.

**In** an embodiment, the instructions stored in the memory 130 may, when executed by the processor 220, cause the electronic device 200 to obtain the battery information about the electronic device 200 and/or the external electronic device 1000 in operation 310.

According to an embodiment, the battery information about the electronic device 200 and/or the external electronic device 1000 may include information related to a battery of the electronic device 200 and/or the external electronic device 1000 and/or information related to a user's usage pattern of the electronic device 200 and/or the external electronic device 1000.

For example, the information related to the battery of the electronic device 200 and/or the external electronic device 1000 may include information about the electronic device 200 and/or the external electronic device 1000, a remaining battery level, whether the battery is being charged, and/or battery life information.

For example, the information related to the user's usage pattern may include the average daily usage time of the electronic device 200 and/or the external electronic device 1000, an application used, and/or battery usage according to the application.

According to an embodiment, with respect to the external electronic device 1000 directly connected to the electronic device 200 through a communication module 290, the processor 220 may obtain the battery information about the external electronic device 1000 from the external electronic device through the communication module 290.

According to an embodiment, with respect to the external electronic device 1000 connected to a server, the processor 220 may obtain the battery information about the external electronic device 1000 from the server through the communication module 290. For example, the processor 220 may obtain the battery information about the external electronic device 1000 registered in the server from the server after passing through a personal authentication procedure (e.g., a network-based account, biometric authentication, a password, a pattern, a voice, or an iris).

According to an embodiment, the processor 220 may obtain the battery information about the external electronic device 1000 from an application. For example, the processor 220 may request the battery information about the external electronic device 1000 from a connected application, and may obtain the battery information about the external electronic device 1000 from the application.

According to an embodiment, the processor 220 may obtain the battery information about the external electronic device 1000 operating at a specified time (e.g., wake-up time, bedtime, time to go to work, or quitting time).

According to an embodiment, the processor 220 may obtain the battery information about the external electronic device 1000 at a specified location (e.g., home, a car, a company, a coffee shop, or a library).

According to an embodiment, the processor 220 may obtain the battery information about the external electronic device 1000 when a specified event occurs (e.g., getting in a car).

According to an embodiment, in operation 320, the processor 220 may analyze the available time of the external electronic device 1000, based on the battery information about the electronic device 200 and/or the external electronic device 1000.

**In** an embodiment, the instructions stored in the memory 130 may, when executed by the processor 220, cause the electronic device 200 to analyze the available time of the external electronic device 1000, based on the battery information about the electronic device 200 and/or the external electronic device 1000 in operation 320.

In an embodiment, the processor 220 may analyze the available time of the electronic device 200 and/or the external electronic device 1000, based on the information related to the battery of the electronic device 200 and/or the external electronic device 1000 and/or the information related to the user's usage pattern of the electronic device 200 and/or the external electronic device 1000.

In an embodiment, in operation 330, the processor 220 may determine an action to control the electronic device 200 and/or the external electronic device 1000, based on the available time of the electronic device 200 and/or the external electronic device 1000.

In an embodiment, the instructions stored in the memory 130 may, when executed by the processor 220, cause the electronic device 200 to determine the action to control the electronic device 200 and/or the external electronic device 1000, based on the available time of the electronic device 200 and/or the external electronic device 1000 in operation 330.

In an embodiment, the processor 220 may determine the action to control the electronic device 200 and/or the external electronic device 1000 in response to the available time of the electronic device 200 and/or the external electronic device 1000 being a specified time or less.

In an embodiment, the action to control the electronic device 200 and/or the external electronic device 1000 may be an action to reduce battery consumption of the external electronic device 1000. For example, the action may include a switch to a power saving mode, battery optimization, deactivation of active noise cancellation, and/or analysis of an optimal charging method.

In an embodiment, in operation 340, the processor 220 may configure a widget, based on the battery information about the electronic device 200 and/or the external electronic device 1000 and the action.

In an embodiment, the instructions stored in the memory 130 may, when executed by the processor 220, cause the electronic device 200 to configure the widget, based on the battery information about the electronic device 200 and/or the external electronic device 1000 and the action in operation 340.

In an embodiment, the widget may include the battery information about the electronic device 200 and/or the external electronic device 1000. For example, the widget may include a title, an icon corresponding to the electronic device 200 and/or the external electronic device 1000, a name of the electronic device 200 and/or the external electronic device 1000, a battery level chart of the electronic device 200 and/or the external electronic device 1000, a battery level percentage of the electronic device 200 and/or the external electronic device 1000, an icon related to charging, left and right markers of the external electronic device 1000, guidance on an optimal charging method, and/or the available time.

According to an embodiment, the widget may be in various forms, such as a list type and a grid type, and the size of widget may be freely changed.

According to an embodiment, the processor 220 may determine the order of information to be displayed in the widget, based on the priority of the information. For example, the processor 220 may display the information related to the battery of the electronic device 200 at the top of the widget and the information related to the battery of the external electronic device 1000 at the bottom of the widget. For example, the processor 220 may display the information related to the battery of the external electronic device 1000, based on the specified priority of the external electronic device 1000.

According to an embodiment, in operation 350, the processor 220 may display the widget on a display 260.

In an embodiment, the instructions stored in the memory 130 may, when executed by the processor 220, cause the electronic device 200 to display the widget on the display 260 in operation 350.

According to an embodiment, the processor 220 may display the widget on at least a portion of the display 260. For example, the processor 220 may display the widget on the entire screen of the display 260. For example, the processor 220 may display the widget on one side of the screen. For example, the processor 220 may display the widget on a split screen.

In an embodiment, the processor 220 may display a screen related to the battery information on the display 260 in response to a user input of selecting the widget.

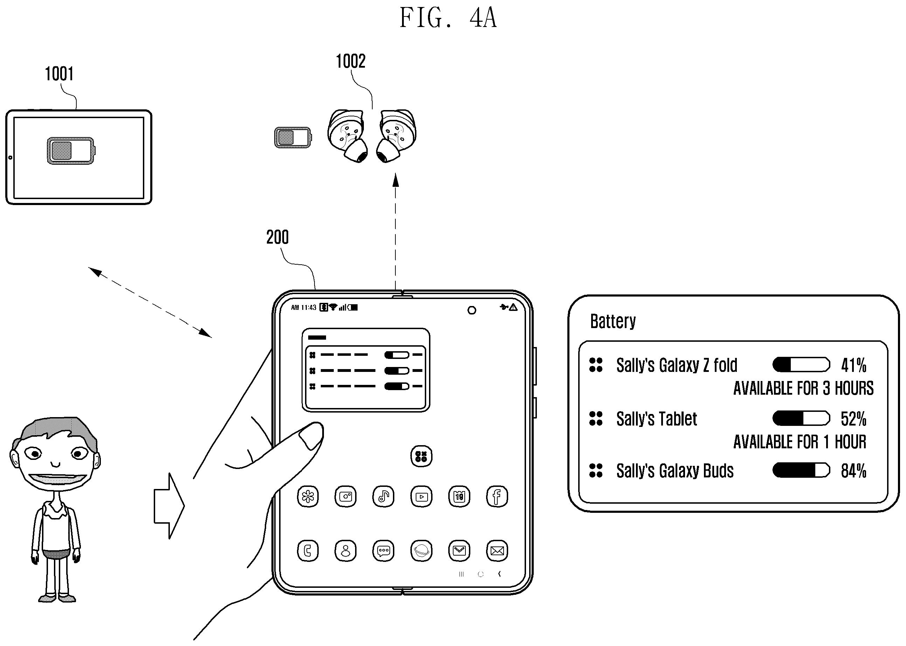

FIG. 4A illustrates an example of a widget that a processor 220 displays on a display 260, based on battery information about an external electronic device 1000 according to various embodiments.

According to an embodiment, an electronic device 200 may obtain battery information about the electronic device 200, a first external electronic device 1001, and a second external electronic device 1002.

The first external electronic device 1001 and the second external electronic device 1002 may be external electronic devices directly connected to the electronic device 200 via a communication module 290.

According to an embodiment, the battery information about the electronic device 200, the first external electronic device 1001, and the second external electronic device 1002 may include information related to a battery of the electronic device 200, the first external electronic device 1001, and the second external electronic device 1002 and/or information related to a user's usage pattern of the electronic device 200, the first external electronic device 1001, and the second external electronic device 1002.

According to an embodiment, the electronic device 200 may analyze the available time of the electronic device 200, the first external electronic device 1001, and the second external electronic device 1002, based on the battery information about the electronic device 200, the first external electronic device 1001, and the second external electronic device 1002.

According to an embodiment, the electronic device 200 may configure a widget, based on the battery information about the electronic device 200, the first external electronic device 1001, and the second external electronic device 1002.

According to an embodiment, the widget may include the battery information about the electronic device 200, the first external electronic device 1001, and the second external electronic device 1002. For example, the widget may include a title (Battery), a name of the electronic device 200 (Sally's Galaxy Z Fold or This Phone), a name of the first external electronic device 1001 (Sally's Tablet), a name of the second external electronic device 1002 (Sally's Galaxy Buds), battery level charts of the electronic device 200, the first external electronic device 1001 and the second external electronic device 1002, battery level percentages of the electronic device 200, the first external electronic device 1001 and the second external electronic device 1002, and/or available times of the electronic device 200, the first external electronic device 1001 and the second external electronic device 1002.

In an embodiment, the electronic device 200 may display the widget on the display 260.

According to an embodiment, the electronic device 200 may display the widget on at least a portion of the display 260.

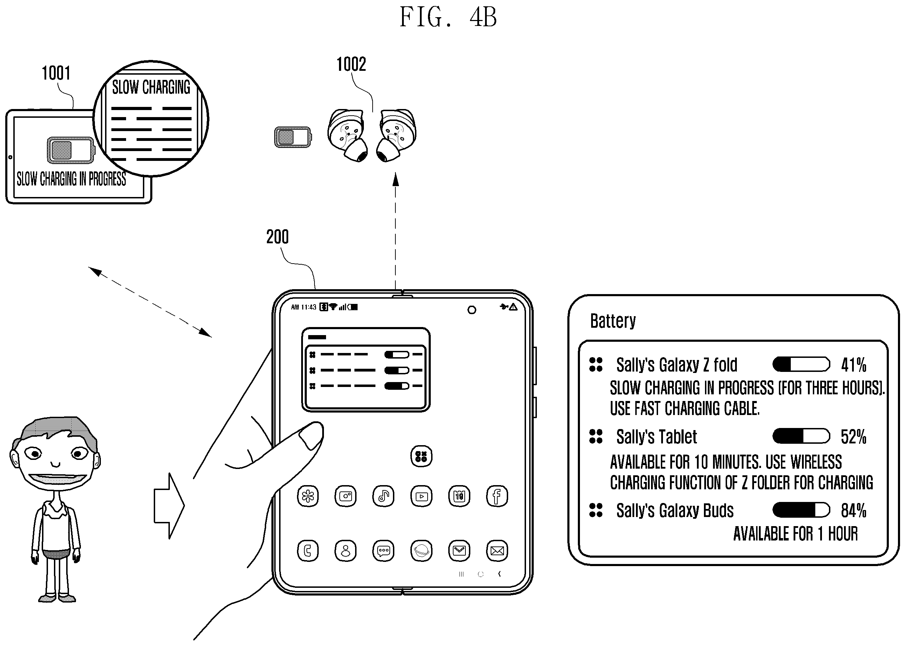

FIG. 4B illustrates an example of a widget that a processor 220 displays on a display 260, based on battery information about an external electronic device 1000 according to various embodiments.

According to an embodiment, an electronic device 200 may obtain battery information about the electronic device 200, a first external electronic device 1001, and a second external electronic device 1002.

The first external electronic device 1001 and the second external electronic device 1002 may be external electronic devices directly connected to the electronic device 200 via a communication module 290.

According to an embodiment, the battery information about the electronic device 200, the first external electronic device 1001, and the second external electronic device 1002 may include information related to a battery of the electronic device 200, the first external electronic device 1001, and the second external electronic device 1002 and/or information related to a user's usage pattern of the electronic device 200, the first external electronic device 1001, and the second external electronic device 1002.

According to an embodiment, the electronic device 200 may analyze the available time of the electronic device 200, the first external electronic device 1001, and the second external electronic device 1002, based on the battery information about the electronic device 200, the first external electronic device 1001, and the second external electronic device 1002.

According to an embodiment, the electronic device 200 may determine an action to control the electronic device 200 and the first external electronic device 1001, based on the available time of the electronic device 200 and the first external electronic device 1001.

According to an embodiment, the electronic device 200 may determine an action to control the electronic device 200 and the second external electronic device 1002 in response to the available time of the electronic device 200 and the second external electronic device 1002 being a specified time or less.

According to an embodiment, the action to control the electronic device 200 and the first external electronic device 1001 may be an action to reduce battery consumption of the electronic device 200 and the first external electronic device 1001, and may be analysis of an optimal charging method.

According to an embodiment, the electronic device 200 may configure a widget, based on the battery information about the electronic device 200, the first external electronic device 1001, and the second external electronic device 1002.

According to an embodiment, the widget may include the battery information about the electronic device 200, the first external electronic device 1001, and the second external electronic device 1002. For example, the widget may include a title (Battery), a name of the electronic device 200 (Sally's Galaxy Z Fold or This Phone), a name of the first external electronic device 1001 (Sally's Tablet), a name of the second external electronic device 1002 (Sally's Galaxy Buds), battery level charts of the electronic device 200, the first external electronic device 1001 and the second external electronic device 1002, battery level percentages of the electronic device 200, the first external electronic device 1001 and the second external electronic device 1002, and/or available times of the electronic device 200, the first external electronic device 1001 and the second external electronic device 1002, guidance on an optimal charging method ("Use a fast charging cable") for the first external electronic device 1001, and guidance on an optimal charging method ("Use a wireless charging function of the Fold for charging") for the second external electronic device 1002.

According to an embodiment, the electronic device 200 may display the widget on the display 260.

According to an embodiment, the electronic device 200 may display the widget on at least a portion of the display 260.

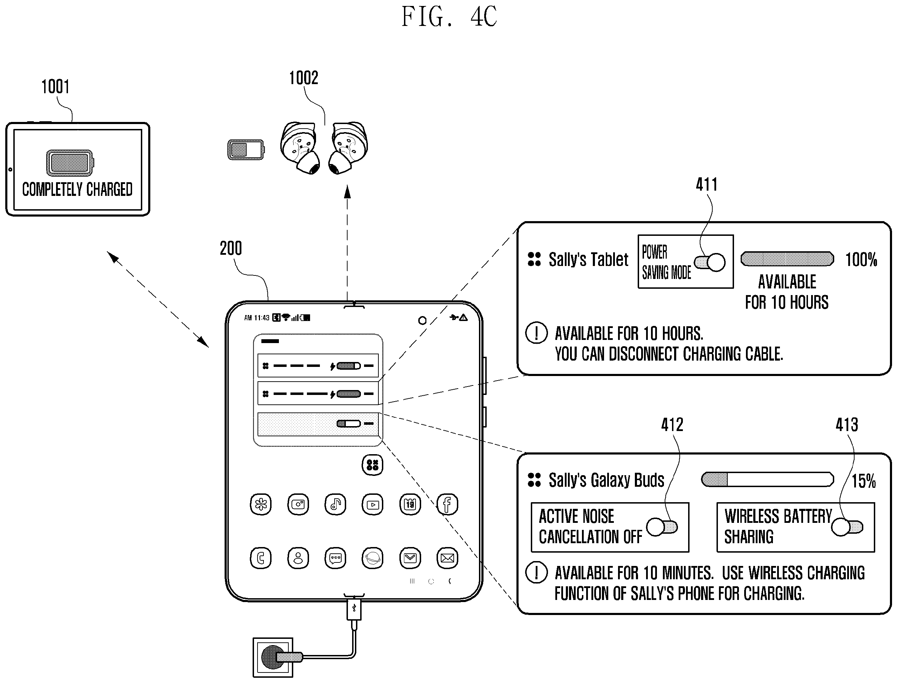

FIG. 4C illustrates an example of a widget that a processor 220 displays on a display 260, based on battery information about an external electronic device 1000 according to various embodiments.

According to an embodiment, an electronic device 200 may obtain battery information about the electronic device 200, a first external electronic device 1001, and/or a second external electronic device 1002.

The first external electronic device 1001 and/or the second external electronic device 1002 may be external electronic devices directly connected to the electronic device 200 via a communication module 290.

According to an embodiment, the battery information about the electronic device 200, the first external electronic device 1001, and the second external electronic device 1002 may include information related to a battery, such as the remaining battery time and remaining level of the electronic device 200, the first external electronic device 1001, and the second external electronic device 1002, and/or information about an application being used, power configuration information (e.g., a power saving mode being on), or information related to a user's usage pattern with respect to the electronic device 200, the first external electronic device 1001, and the second external electronic device 1002.

According to an embodiment, the electronic device 200 may analyze the available time of the electronic device 200, the first external electronic device 1001, and the second external electronic device 1002, based on the battery information about the electronic device 200, the first external electronic device 1001, and the second external electronic device 1002.

According to an embodiment, the electronic device 200 may determine an action to control the electronic device 200 and the first external electronic device 1001, based on the available time of the electronic device 200 and the first external electronic device 1001, and may display the action on a widget.

In an embodiment, the electronic device 200 may determine an action to control the electronic device 200 and the second external electronic device 1002 in response to the available time of the electronic device 200 and the second external electronic device 1002 being a specified time or less.

In an embodiment, the electronic device 200 may provide battery-related information indicating that the first external electronic device 1001 is being charged and including charging information through the widget. When the available time satisfies a specified condition (e.g., when detecting that the available time is a specified time or longer and/or the battery level is a specified threshold value (e.g., a remaining level of 50%) or greater), based on the charging information about the first external electronic device 1001, the electronic device 200 may provide, for example, an icon 411 (e.g., a toggle-type icon) to turn the power saving mode on or off as an action to control the first external electronic device 1001, and may perform a control action for the first external electronic device 1001, based on a user input. The electronic device 200 may transmit corresponding control action information to the first external electronic device 1001, based on receiving a user input to turn off the power saving mode, and the first external electronic device 1001 may receive the control action information and deactivate the power saving mode.

According to an embodiment, the electronic device 200 may configure a battery widget corresponding to the first external electronic device 1001, based on the battery information (e.g., the remaining time and the remaining level) about the first external electronic device 1001 and the information about the application being used (e.g., a video call application being executed).

According to an embodiment, when the available time of the first external electronic device 1001 satisfies a specified condition (e.g., when detecting that the available time is a specified time or less and/or the battery level is a specified threshold value (e.g., a low battery) or less), for example, when the battery level drops from 51% to 50%, the icon 411 (e.g., the toggle-type icon) corresponding to the action to control the first external electronic device 1001 (e.g., to perform the power saving mode) may be displayed, and the control action for the first external electronic device 1001 may be performed based on a user input. For example, in this case, the control action is an action to minimize battery consumption, and the first external electronic device 1001 may perform the power saving mode upon receiving the control action information from the electronic device. In this case, the first external electronic device 1001 may perform a control operation for power saving, for example, deactivating an always-on mode, limiting CPU speed to 70%, and/or lowering screen brightness to 10%. In addition, the first external electronic device 1001 may perform a power saving operation, such as using a network in the background, limiting synchronization/location confirmation, and limiting display refresh rate to 60 Hz, and may optionally perform a power saving operation of performing a specified function, such as enabling only a selected application to be used, deactivating an edge panel, and changing a dark theme.

According to an embodiment, the electronic device 200 may configure a widget, based on the battery information about the electronic device 200 and the second external electronic device 1002.

According to an embodiment, the widget may include the battery information about the second external electronic device 1002. The electronic device 200 may receive various pieces of information, such as the battery information (e.g., the remaining time, the remaining level, and a charging type (e.g., wireless charging capability information)), information about an application or a function being used (e.g., a video call application or an active noise activation function), and usage pattern information, from the second external electronic device 1002, and may configure the battery widget, based on the received information.

According to an embodiment, when the available time of the second external electronic device 1002 satisfies a specified condition (e.g., when detecting that the available time is a specified time or less and/or the battery level is a specified threshold value (e.g., a low battery, 25%) or less), an action to control the second external electronic device 1002 (e.g., active noise cancellation turning-off and wireless battery sharing) may be displayed, and a control action may be performed based on a user input. The battery widget of the second external electronic device 1002 may provide a plurality of control actions, for example, an active noise cancellation turning-off icon 412 (e.g., a toggle-type icon) and/or an wireless battery sharing selection icon 413 (e.g., a toggle-type icon).

According to an embodiment, the electronic device 200 may provide suggestion information for battery charging optimization, separately from the control actions, as a result of analysis of the available time and a battery charging optimization method. For example, the suggestion information may include at least one object indicating the suggestion information (e.g., an exclamation mark icon and/or text such as "Available time is 10 minutes, and use the wireless charging function of Sally's phone for charging").

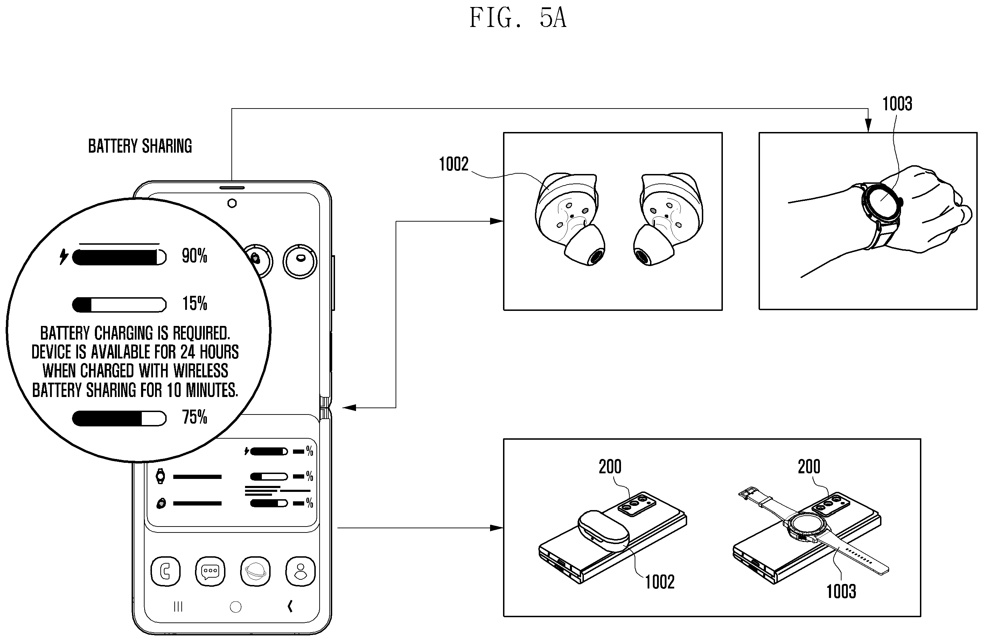

FIG. 5A illustrates an example of a widget that a processor 220 displays on a display 260, based on battery information about an external electronic device 1000 according to various embodiments.

According to an embodiment, the electronic device 200 may obtain battery information about a second external electronic device 1002 and a third external electronic device 1003.

The electronic device 200, the second external electronic device 1002, and the third external electronic device 1003 may be external electronic devices directly connected to the electronic device 200 via a communication module 290.

According to an embodiment, the battery information about the second external electronic device 1002 and the third external electronic device 1003 may include information related a battery of the second external electronic device 1002 and the third external electronic device 1003 and/or information related to the usage pattern of a user of the second external electronic device 1002 and the third external electronic device 1003.

According to an embodiment, the electronic device 200 may analyze the available time of the electronic device 200, the second external electronic device 1002, and the third external electronic device 1003, based on the battery information about the second external electronic device 1002 and the third external electronic device 1003.

According to an embodiment, the electronic device 200 may determine an action to control the second external electronic device 1002 and the third external electronic device 1003 in response to the available time of the second external electronic device 1002 and the third external electronic device 1003.

According to an embodiment, the electronic device 200 may determine the action to control the second external electronic device 1002 and the third external electronic device 1003 in response to the available time of the second external electronic device 1002 and the third external electronic device 1003 being a specified time or less.

According to an embodiment, the action to control the second external electronic device 1002 and the third external electronic device 1003 may be an action to reduce battery consumption of the second external electronic device 1002 and the third external electronic device 1003, and may be analysis of an optimal charging method.

According to an embodiment, the electronic device 200 may configure a widget, based on the battery information about the second external electronic device 1002 and the third external electronic device 1003.

According to an embodiment, the widget may include the battery information about the second external electronic device 1002 and the third external electronic device 1003. For example, the widget may include the battery information about the second external electronic device 1002 and the third external electronic device 1003. For example, the widget may include an icon corresponding to the second external electronic device 1002 and the third external electronic device 1003, a name of the second external electronic device 1002 and the third external electronic device 1003, a battery level chart of the second external electronic device 1002 and the third external electronic device 1003, a battery level percentage of the second external electronic device 1002 and the third external electronic device 1003, a charging-related information notification (e.g., "Battery charging is required" and "Battery is not being charged properly") of the electronic device 200, the first external electronic device 1001, or the second external electronic device 1002, and/or guidance on an optimal charging method ("The electronic device is available for 24 hours when charged with wireless battery sharing for 10 minutes. ") for the second external electronic device 1002 and the third external electronic device 1003.

According to an embodiment, the electronic device 200 may display the widget on the display 260.

According to an embodiment, the electronic device 200 may display the widget on at least a portion of the display 260.

The user may charge the second external electronic device 1002 and the third external electronic device 1003 with wireless battery sharing of the electronic device 200 according to the guidance on the optimal charging method for the second external electronic device 1002 and the third external electronic device 1003.

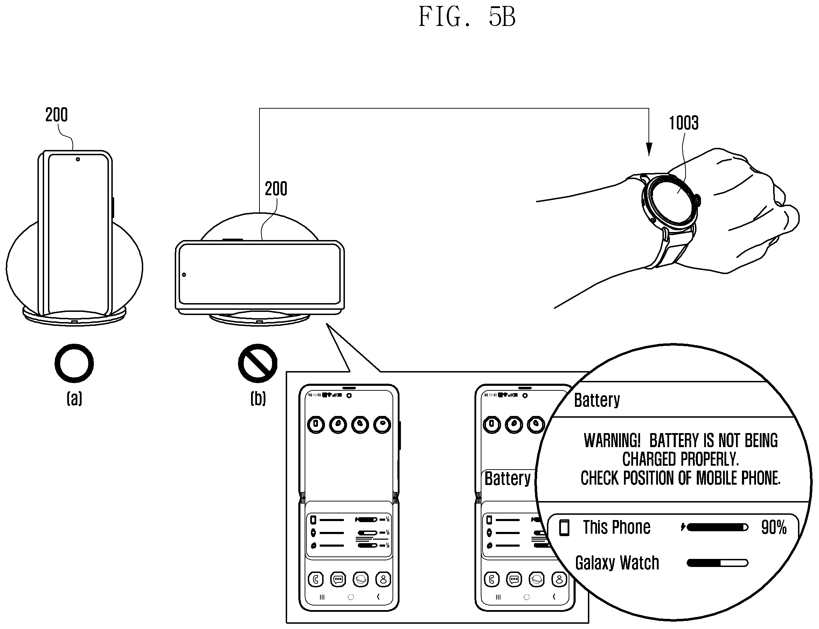

FIG. 5B illustrates an example of a widget that a processor 220 displays on a display 260, based on battery information about an external electronic device 1000 according to various embodiments.

According to an embodiment, an electronic device 200 may obtain battery information about the electronic device 200.

According to an embodiment, the battery information about the electronic device 200 may include whether a battery of the electronic device 200 is being charged.

According to an embodiment, the electronic device 200 may display a related guidance message (e.g., "Warning! The battery is not being charged properly. Check the position of the mobile phone.") on a widget in response to a notification of battery charging-related information about the electronic device 200, for example, a battery not being charged properly.

According to an embodiment, the electronic device 200 may transmit a message for requesting display of a related notification to a connected external electronic device 1003 in response to the battery of the electronic device 200 not being charged properly.

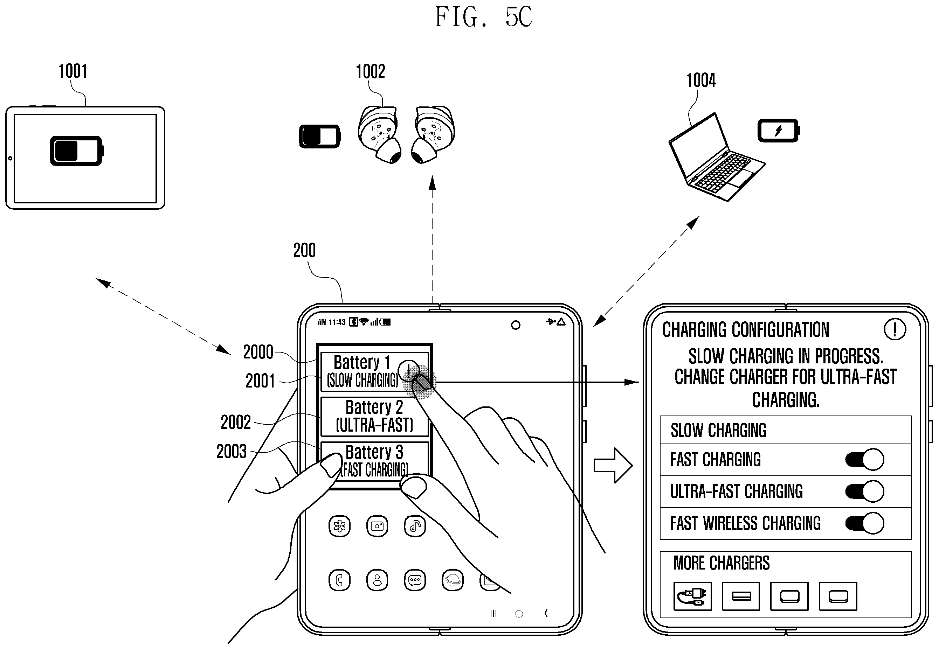

FIG. 5C illustrates an example of a widget that a processor 220 displays on a display 260, based on battery information about an external electronic device 1000 according to various embodiments.

According to an embodiment, the electronic device 200 may obtain battery information about a first external electronic device 1001, a second external electronic device 1002, and a fourth external electronic device 1004.

The first external electronic device 1001, the second external electronic device 1002, and the fourth external electronic device 1004 may be external electronic devices directly connected to the electronic device 200 via a communication module 290.

According to an embodiment, the battery information about the first external electronic device 1001, the second external electronic device 1002, and the fourth external electronic device 1004 may include information related to a battery of the first external electronic device 1001, the second external electronic device 1002, and the fourth external electronic device 1004 and/or information related to a usage pattern of a user of the first external electronic device 1001, the second external electronic device 1002, and the fourth external electronic device 1004.

According to an embodiment, the electronic device 200 may analyze the available time of the first external electronic device 1001, the second external electronic device 1002, and the fourth external electronic device 1004, based on the battery information about the first external electronic device 1001, the second external electronic device 1002, and the fourth external electronic device 1004.

According to an embodiment, the electronic device 200 may determine an action to control the first external electronic device 1001, the second external electronic device 1002, and the fourth external electronic device 1004, based on the available time of the first external electronic device 1001, the second external electronic device 1002, and the fourth external electronic device 1004.

According to an embodiment, the electronic device 200 may determine the action to control the first external electronic device 1001, the second external electronic device 1002, and the fourth external electronic device 1004 in response to the available time of the first external electronic device 1001, the second external electronic device 1002, and the fourth external electronic device 1004 being a specified time or less.

According to an embodiment, the action to control the first external electronic device 1001, the second external electronic device 1002, and the fourth external electronic device 1004 may be an action to reduce battery consumption of the first external electronic device 1001, the second external electronic device 1002, and the fourth external electronic device 1004, and may be analysis of an optimal charging method.

According to an embodiment, the electronic device 200 may configure a widget, based on the battery information about the first external electronic device 1001, the second external electronic device 1002, and the fourth external electronic device 1004.

According to an embodiment, the widget may include the battery information about the first external electronic device 1001, the second external electronic device 1002, and the fourth external electronic device 1004. For example, the widget may include a name of the first external electronic device 1001, the second external electronic device 1002, and the fourth external electronic device 1004, the state (fast, ultra-fast, or slow) of a connected charger, a notification of the current charging method ("slow charging") of the first external electronic device 1001, a notification of the current charging method ("ultra-fast") of the second external electronic device 1002, and/or a notification of the current charging method ("fast charging") of the fourth external electronic device 1004. According to an embodiment, the widget may provide a configuration menu for changing the charging method to fast charging, ultra-fast charging, or fast wireless charging when the charging state of the first external electronic device 1001 is identified as being, for example, "slow charging," and may allow the optimal charging method to be changed according to a user selection to control the first external electronic device 1001.

According to an embodiment, the electronic device 200 may display the widget on the display 260.

According to an embodiment, the electronic device 200 may display the widget on at least a portion of the display 260.

According to an embodiment, the electronic device 200 may display a screen related to battery information on the display 260 in response to a user's input to select the widget. For example, the electronic device 200 may display a screen including guidance on the optimal charging method for the first external electronic device 1001 ("Slow charging in progress. Change the charger for ultra-fast charging.") on the display 260 in response to a user's input to select a widget related to the battery of the first external electronic device 1001. For example, the screen including the guidance on the optimal charging method for the first external electronic device 1001 may be displayed in a pop-up form on the display 260.

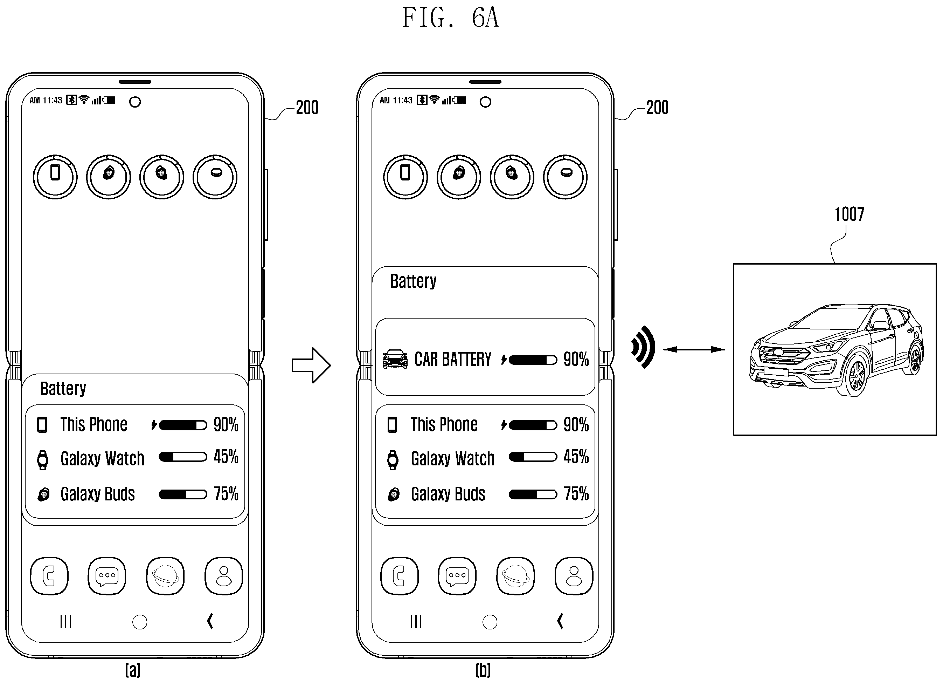

FIG. 6A illustrates an example in which an electronic device 200 displays battery information about an external electronic device 1000 by using UWB communication according to various embodiments.

According to an embodiment, the electronic device 200 may communicate with an external electronic device through a UWB module 230.

According to an embodiment, the UWB module 230 may be a communication circuit supporting an ultra-wideband (UWB) wireless communication method.

According to an embodiment, the electronic device 200 may display battery information about the external electronic device 1000 that obtains a UWB signal in a UWB measurement range.

According to an embodiment, the electronic device 200 may configure a widget, based on battery information (Battery Info 1) about a second external electronic device 1002 obtaining a UWB signal and battery information (Battery Info 2) about a fourth external electronic device 1004 obtaining a UWB signal among a first external electronic device 1001, the second external electronic device 1002, the fourth external electronic device 1004, and a fifth external electronic device 1005 which are connected, and may display the widget on a display 260.

A user may position the electronic device 200 in the direction of the external electronic device 1000 which the user wants to obtain the battery information about, and may identify the battery information about the external electronic device 1000.

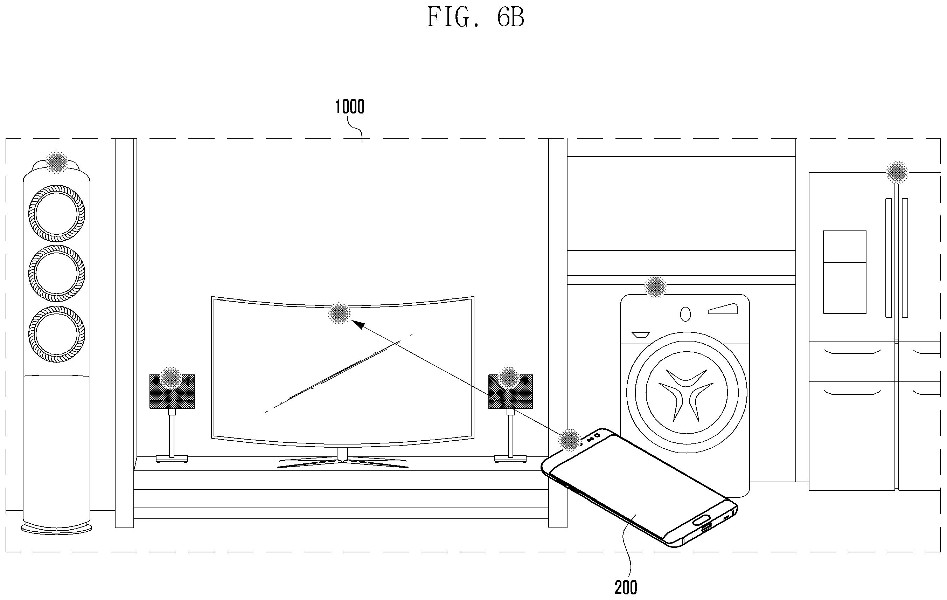

FIG. 6B illustrates an example in which an electronic device 200 selects an external electronic device 1000 about which battery information is to be obtained by using UWB communication according to various embodiments.

In the example illustrated in FIG. 6B, the electronic device 200 may display battery information about an external electronic device that obtains a UWB signal among connected external electronic devices 1000.

According to an embodiment, battery information about a specific external electronic device may be obtained based on UWB measurement in response to a specified input (e.g., a specified operation with respect to the electronic device 200) through the electronic device 200. For example, in response to an operation of positioning the electronic device 200 in the direction of an external electronic device (e.g., the direction of a TV) about which battery information is to be obtained among external electronic devices 1000, the external electronic device (e.g., the TV) positioned in the direction may be identified based on UWB measurement through a UWB module 230, and the battery information may be obtained by receiving a UWB signal of the identified external electronic device (e.g., the TV).

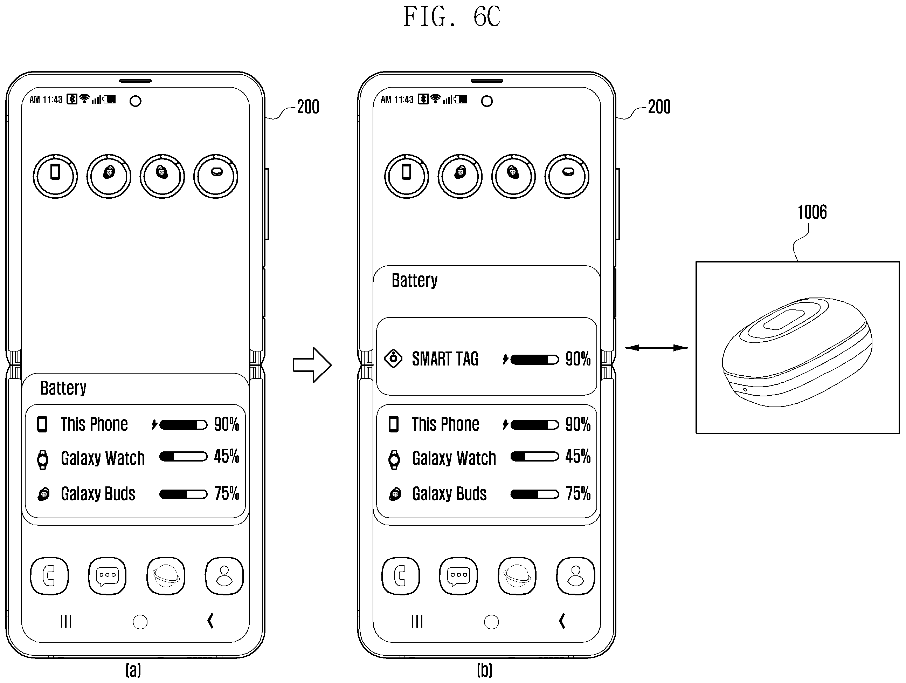

FIG. 6C illustrates an example in which a processor 220 obtains battery information about a sixth external electronic device 1006 by using UWB communication according to various embodiments.

Referring to part (a), an electronic device 200 may display a widget on a display 260, based on battery information about the electronic device 200 and a connected external electronic device.

Referring to part (b), the electronic device 200 may communicate with the sixth external electronic device 1006 (e.g., a smart tag) through a UWB module 230.

The electronic device 200 may display the battery information about the sixth external electronic device 1006 that obtains a UWB signal in a UWB measurement range. For example, the electronic device 200 may obtain the battery information about the sixth external electronic device 1006 through the sixth external electronic device 1006 and the UWB signal.

According to an embodiment, the electronic device 200 may configure a widget ("smart tag"), based on the battery information about the sixth external electronic device 1006 obtaining the UWB signal, and may display the widget on the display 260.

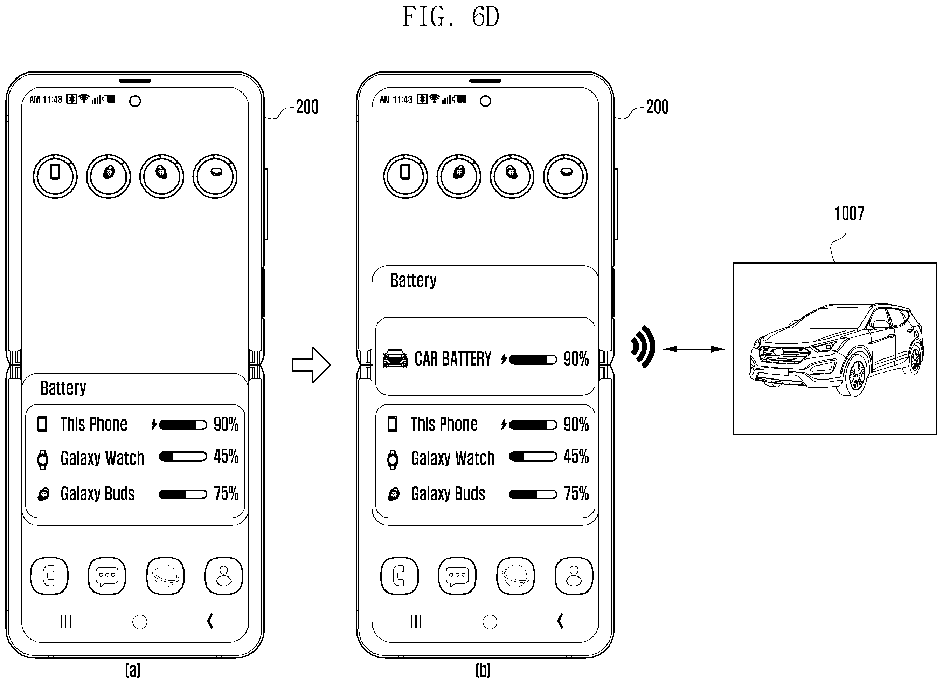

FIG. 6D illustrates an example in which a processor 220 obtains battery information about a seventh external electronic device 1007 by using UWB communication according to various embodiments.

Referring to part (a), an electronic device 200 may display a widget on a display 260, based on battery information about the electronic device 200 and a connected external electronic device.

Referring to part (b), the electronic device 200 may communicate with the seventh external electronic device 1007 (e.g., a car) through a UWB module 230.

The electronic device 200 may display the battery information about the seventh external electronic device 1007 that obtains a UWB signal in a UWB measurement range.

According to an embodiment, the electronic device 200 may configure a widget ("car battery"), based on the battery information about the seventh external electronic device 1007 obtaining the UWB signal, and may display the widget on the display 260.

According to an embodiment, when the UWB signal is lost from the seventh external electronic device 1007 obtaining the UWB signal, the electronic device 200 may delete the widget ("car battery") configured based on the battery information about the seventh external electronic device 1007 from the display 260.

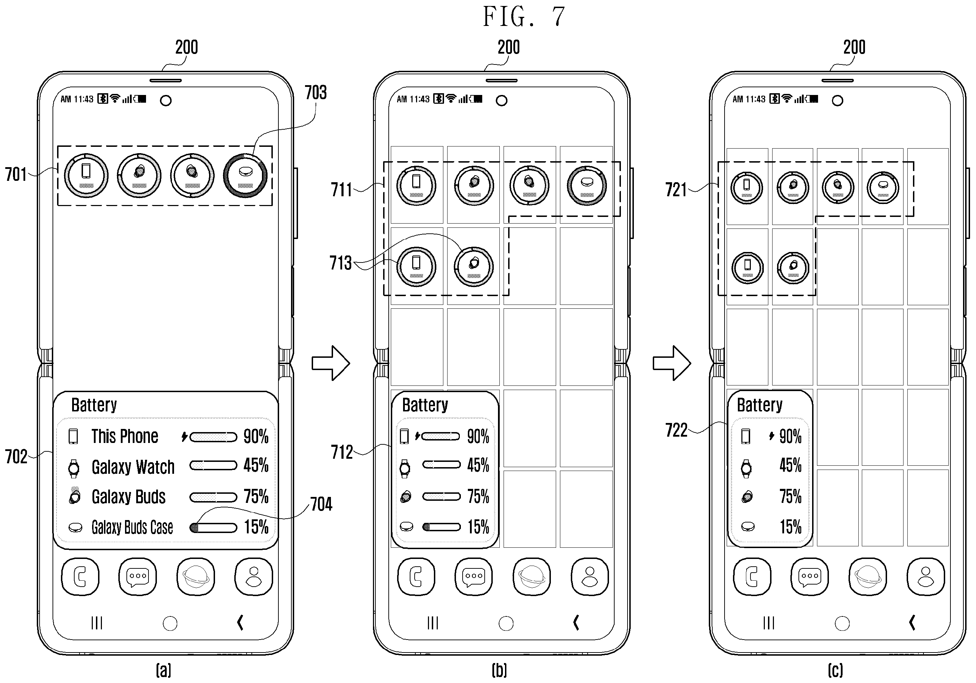

FIG. 7 illustrates an example of a widget that a processor displays on a display, based on battery information about an external electronic device according to various embodiments.

According to an embodiment, the processor (e.g., the processor 220 of FIG. 2) may configure a widget, based on battery information about an electronic device (e.g., the electronic device 200 of FIG. 2) and an external electronic device (e.g., a first external electronic device 1001, a second external electronic device 1002, and/or a third external electronic device 1003).

According to an embodiment, the widget may include the battery information about the electronic device 200 and/or the external electronic device. For example, the widget may include a title, an icon corresponding to the electronic device 200 and/or the external electronic device, a name of the electronic device 200 and/or the external electronic device, a battery level chart of the electronic device 200 and/or the external electronic device, a battery level percentage of the electronic device 200 and/or the external electronic device, an icon related to charging, left and right markers of the external electronic device, guidance on an optimal charging method, and/or available time.

According to an embodiment, the widget may be displayed in a list type 702 and/or a grid type 701. For example, the widget of the list type 702 may display a corresponding icon, a name (This Phone), an icon indicating that charging is in progress (lightning-bolt image), a battery level chart (horizontal bar graph form), and a battery level percentage (90%) with respect to the electronic device 200. For example, the widget of the grid type 701 may include a corresponding icon and/or a battery level chart (circular chart showing a battery level percentage relative to the total 100% in color and/or shade) with respect to the electronic device 200, and may further display additional information (e.g., a battery level percentage (90%) and/or an icon indicating that charging is in progress), which is not shown.

According to an embodiment, the size of the widget may be changed as in (a), (b), or (c) of FIG. 7. For example, the size of the widget of the list type 702 may be reduced in a horizontal direction and/or vertical direction as in (b) or (c) of FIG. 7. For example, when the size of the list type 702 is reduced, some of the displayed information may be omitted or displayed briefly. For example, the size of the widget of the grid type 701 may be displayed as being reduced as in (c) of FIG. 7.

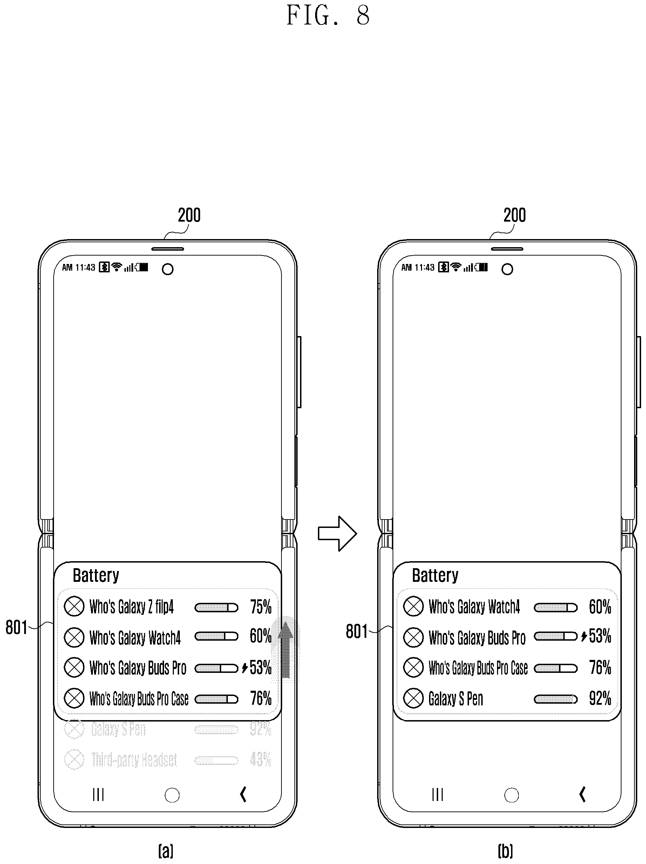

According to an embodiment, the number of devices displayed in the widget may be changed. For example, four devices may be displayed in the widget of the grid type 701 in (a) of FIG. 7, while battery information about six devices may be displayed by adding two devices 713 in (b) of FIG. 7. **In** this case, an area or size indicating each battery information may not be changed as in (b) of FIG. 7, or may be displayed as being reduced as in (c) of FIG. 7. According to an embodiment, the processor 220 may determine the order of information to be displayed in the widget, based on the priority of the information. For example, the processor 220 may display information related to a battery of the electronic device 200 at the top of the widget and information related to a battery of the external electronic device at the bottom of the widget. For example, the processor 220 may display the information related to the battery of the external electronic device, based on the specified priority of the external electronic device. The specified priority may be preconfigured and stored in the electronic device 200. The specified priority may be configured, for example, in the order of frequently used peripheral devices. The specified priority may be configured or changed, for example, according to a user's selection. According to an embodiment, a notification may be displayed for a device having a battery level less than a specified battery power in the widget. For example, the notification may be provided by a change in the color or shape of a battery level chart on a battery information screen of the device. For example, when the battery level is 15% or less, an area indicating the battery level in the battery level chart 703 or 704 of the battery information about each device in the widgets of the list type 702 and the grid type 701 may be displayed with a different color, for example, red, from that for other devices. FIG. 8 illustrates an example of a widget that a processor displays on a display, based on battery information about an external electronic device according to various embodiments.

According to an embodiment, the processor (e.g., the processor 220 of FIG. 2) may configure a widget, based on battery information about an electronic device (e.g., the electronic device 200 of FIG. 2) and an external electronic device (e.g., a first external electronic device 1001, a second external electronic device 1002, and/or a third external electronic device 1003).

According to an embodiment, a fixed number of devices a preset number of devices may be displayed in the widget 801. For example, when battery information about four devices may be displayed in the widget 801, if there is battery information about an additional external electronic device that is not displayed on a screen, the battery information about the external electronic device that is not displayed may be displayed by touching the screen. For example, the battery information about the external electronic device (e.g., Galaxy S Pen) that has not been displayed may be displayed on the widget 801 in response to a sliding touch input to the widget 801, in which case the battery information about the electronic device (Who's Galaxy Z Flip 4) that has been displayed may be moved, for example, upward from the screen of the widget 801 and disappear at least temporarily.

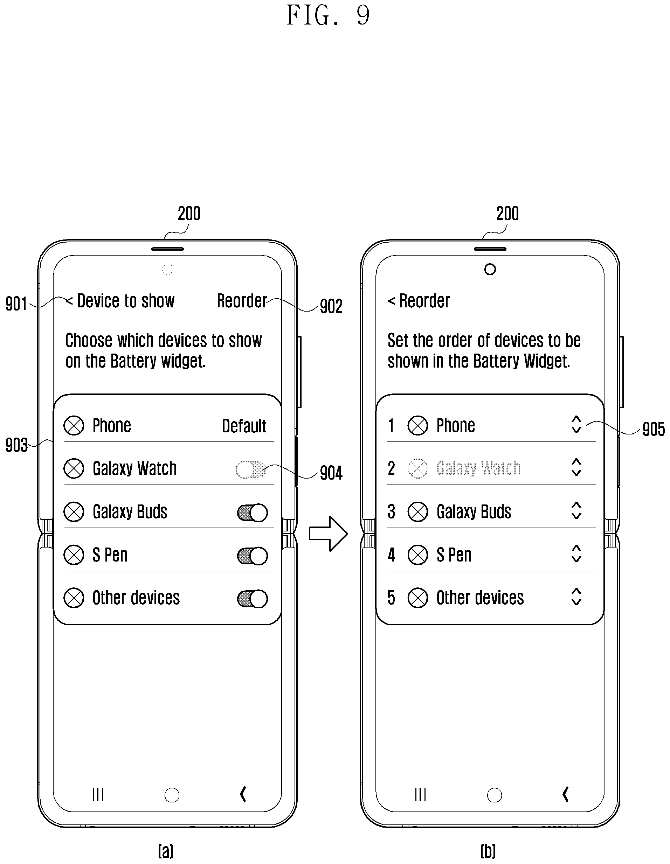

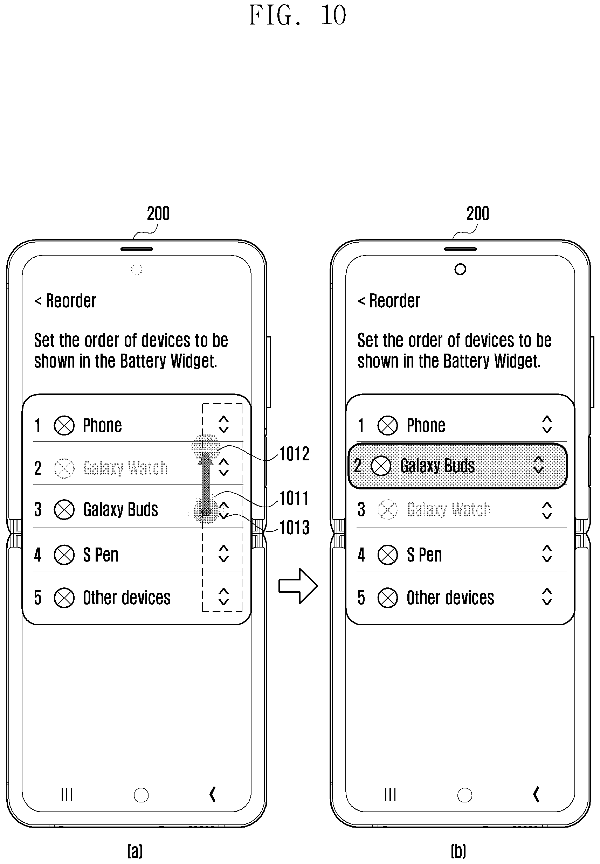

FIG. 9 and FIG. 10 illustrate examples in which a processor configures a widget displayed on a display, based on battery information about an external electronic device according to various embodiments.

According to an embodiment, the processor (e.g., the processor 220 of FIG. 2) may configure a widget, based on battery information about an electronic device (e.g., the electronic device 200 of FIG. 2) and an external electronic device (e.g., a first external electronic device 1001, a second external electronic device 1002, a third external electronic device 1003, and/or a fourth external electronic device 1004).

According to an embodiment, (a) of FIG. 9 shows an example of a widget configuration screen, and a device 901 to be displayed on the widget may be selected through the widget configuration screen. For example, on a configuration menu 903, the battery information about the electronic device 200 may always be displayed by default instead of being changed. For example, the battery information about the external electronic devices (e.g., Galaxy Watch) may be configured to be displayed or not displayed on the widget according to a selection, for example, through a touch input on a toggle-type icon 904. For example, the first external electronic device 1001 (e.g., Galaxy Watch) configured not to be displayed may be displayed semi-transparently in (b) of FIG. 9.

According to an embodiment, the widget configuration screen may include a menu 902 for reordering devices displayed on the widget.

According to an embodiment, when the reordering menu 902 is selected, (b) of FIG. 9 may be provided on a screen of the electronic device 200. For example, on the reordering menu screen shown in (b) of FIG. 9, an icon 905 may be provided on the right side of each device to reposition the device upwards or downwards.

According to an embodiment, by touching an upper part of a right repositioning icon 1013 of the second external electronic device 1002 (e.g., Galaxy Buds) or touching and sliding an area 1011 representing the second external electronic device 1002 (e.g., Galaxy Buds) to an upper area 1012 of the first external electronic device 1001 (e.g., Galaxy Watch) and releasing the touch in (a) of FIG. 10, the second external electronic device 1002 (e.g., Galaxy Buds) may be repositioned to be above the first external electronic device 1001 (e.g., Galaxy Watch) as illustrated in (b) of FIG. 10.

An electronic device (e.g., the electronic device 101 of FIG. 1 or the electronic device 200 of FIG. 2) according to various embodiments may include a communication module (e.g., the communication module 290 of FIG. 2), a display (e.g., the display 260 of FIG. 2), and a processor (e.g., the processor 200 of FIG. 2). The processor may obtain battery information about at least one external electronic device (e.g., the electronic device 102 or 104 of FIG. 1, the external electronic device 1000 of FIG. 2B, or the first external electronic device 1001 FIG. 6D, the second external electronic device 1002, the third external electronic device 1003, the fourth external electronic device 1004, the fifth external electronic device 1005, the sixth external electronic device 1006, and/or the seventh external electronic device 1007 of FIG. 4A to FIG. 6D), may analyze available time of the at least one external electronic device, based on the battery information about the external electronic device, may determine an action to control the at least one external electronic device, based on the available time of the external electronic device, may configure a widget, based on the battery information about the at least one external electronic device and the action, and may display the widget on the display.

In the electronic device according to various embodiments, the processor may obtain battery information about a first external electronic device from the first external electronic device through the communication module with respect to the first external electronic device directly connected to the electronic device through the communication module, may obtain battery information about a second external electronic device from a server (e.g., the server 108 of FIG. 1) through the communication module with respect to the second external electronic device connected to the server, and may obtain battery information about a third external electronic device from an application with respect to the third external electronic device connected to the application.

**In** the electronic device according to various embodiments, the processor may determine the action to control the at least one external electronic device in response to the available time of the at least one external electronic device being a specified time or less, and the action may be an action to reduce battery consumption of the at least one external electronic device.

**In** the electronic device according to various embodiments, the action may include at least one of a switch to a power saving mode, battery optimization, deactivation of active noise cancellation, and/or analysis of an optimal charging method.

**In** the electronic device according to various embodiments, the widget may include at least one of a title, an icon corresponding to the at least one external electronic device, a name of the at least one external electronic device, a battery level chart of the at least one external electronic device, a battery level percentage of the at least one external electronic device, an icon related to charging, left and right markers of the at least one external electronic device, guidance on an optimal charging method, and the available time.

**In** the electronic device according to various embodiments, the processor may display information related to a battery of the at least one external electronic device on the widget, based on a specified priority of the at least one external electronic device.

In the electronic device according to various embodiments, the processor may display a screen related to information about the at least one external electronic device on the display in response to a user input of selecting the widget displayed on the display.

In the electronic device according to various embodiments, the screen related to the information about the at least one external electronic device may include an action to reduce battery consumption of the at least one external electronic device.

The electronic device according to various embodiments may further include a UWB module, and the processor may display battery information about a fourth external electronic device on the widget in response to reception of a UWB signal of the fourth external electronic device through the UWB module.

In the electronic device according to various embodiments, the processor may identify the fourth external electronic device positioned in a direction of the electronic device through the UWB module in response to a change in the direction and obtain the battery information from the fourth external electronic device through the UWB signal.

An operating method of an electronic device according to various embodiments may include obtaining battery information about at least one external electronic device, analyzing available time of the at least one external electronic device, based on the battery information about the at least one external electronic device, determining an action to control the at least one external electronic device, based on the available time of the at least one external electronic device, configuring a widget, based on the battery information about the at least one external electronic device and the action, and displaying the widget on a display.

The operating method of the electronic device according to various embodiments may include obtaining battery information about a first external electronic device from the first external electronic device through the communication module with respect to the first external electronic device directly connected to the electronic device through a communication module, obtaining battery information about a second external electronic device from a server through the communication module with respect to the second external electronic device connected to the server, and obtaining battery information about a third external electronic device from an application with respect to the third external electronic device connected to the application.

The operating method of the electronic device according to various embodiments may include determining the action to control the at least one external electronic device in response to the available time of the at least one external electronic device being a specified time or less, and the action may be an action to reduce battery consumption of the at least one external electronic device.

In the operating method of the electronic device according to various embodiments, the action may include at least one of a switch to a power saving mode, battery optimization, deactivation of active noise cancellation, and analysis of an optimal charging method.

In the operating method of the electronic device according to various embodiments, the widget may include at least one of a title, an icon corresponding to the at least one external electronic device, a name of the at least one external electronic device, a battery level chart of the at least one external electronic device, a battery level percentage of the at least one external electronic device, an icon related to charging, left and right markers of the at least one external electronic device, guidance on an optimal charging method, and the available time.

The operating method of the electronic device according to various embodiments may include displaying information related to a battery of the at least one external electronic device on the widget, based on a specified priority of the at least one external electronic device.

The operating method of the electronic device according to various embodiments may include displaying a screen related to information about the at least one external electronic device on the display in response to a user input of selecting the widget displayed on the display.

In the operating method of the electronic device according to various embodiments, the screen related to the information about the at least one external electronic device may include an action to reduce battery consumption of the at least one external electronic device.

The operating method of the electronic device according to various embodiments may include displaying battery information about a fourth external electronic device on the widget in response to reception of a UWB signal of the fourth external electronic device through a UWB module.

The operating method of the electronic device according to various embodiments may further include identifying the fourth external electronic device positioned in a direction of the electronic device through the UWB module in response to a change in the direction and obtaining the battery information from the fourth external electronic device through the UWB signal.

The electronic device according to various embodiments set forth herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and the disclosure includes various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one or all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used in various embodiments of the disclosure, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., module or program) of the above-described elements may include a single entity or multiple entities, and some of the multiple entities may be separately disposed in another element. According to various embodiments, one or more of the above-described elements or operations may be omitted, or one or more other elements or operations may be added. Alternatively or additionally, a plurality of elements (e.g., modules or programs) may be integrated into a single element. **In** such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a communication module;
a display;
a memory storing instructions; and
a processor,
wherein the instructions, when executed by the processor, cause the electronic device to:
obtain battery information about at least one external electronic device;
analyze available time of the at least one external electronic device, based on the battery information about the external electronic device;
determine an action to control the at least one external electronic device, based on the available time of the external electronic device;
configure a widget, based on the battery information about the at least one external electronic device and the action; and
display the widget on the display.

2. The electronic device of claim 1, wherein the instructions, when executed by the processor, cause the electronic device to:
obtain battery information about a first external electronic device from the first external electronic device through the communication module with respect to the first external electronic device directly connected to the electronic device through the communication module;
obtain battery information about a second external electronic device from a server through the communication module with respect to the second external electronic device connected to the server; and
obtain battery information about a third external electronic device from an application with respect to the third external electronic device connected to the application.

3. The electronic device of claim 1, wherein the instructions, when executed by the processor, cause the electronic device to
determine the action to control the at least one external electronic device in response to the available time of the at least one external electronic device being a specified time or less, and
wherein the action is an action to reduce battery consumption of the at least one external electronic device.

4. The electronic device of claim 3, wherein the action comprises at least one of a switch to a power saving mode, battery optimization, deactivation of active noise cancellation, and analysis of an optimal charging method, and
wherein the widget comprises at least one of a title, an icon corresponding to the at least one external electronic device, a name of the at least one external electronic device, a battery level chart of the at least one external electronic device, a battery level percentage of the at least one external electronic device, an icon related to charging, left and right markers of the at least one external electronic device, guidance on an optimal charging method, and the available time.

5. The electronic device of claim 1, wherein the instructions, when executed by the processor, cause the electronic device to
display information related to a battery of the at least one external electronic device on the widget, based on a specified priority of the at least one external electronic device.

6. The electronic device of claim 1, wherein the instructions, when executed by the processor, cause the electronic device to
display a screen related to information about the at least one external electronic device on the display in response to a user input of selecting the widget displayed on the display, and
wherein the screen related to the information about the at least one external electronic device comprises an action to reduce battery consumption of the at least one external electronic device.

7. The electronic device of claim 1, further comprising a UWB module,
wherein the instructions, when executed by the processor, cause the electronic device to:
display battery information about a fourth external electronic device on the widget in response to reception of a UWB signal of the fourth external electronic device through the UWB module; and
identify the fourth external electronic device positioned in a direction of the electronic device through the UWB module in response to a change in the direction and obtain the battery information from the fourth external electronic device through the UWB signal.

8. An operating method of an electronic device, the operating method comprising:
obtaining battery information about at least one external electronic device;
analyzing available time of the at least one external electronic device, based on the battery information about the at least one external electronic device;
determining an action to control the at least one external electronic device, based on the available time of the at least one external electronic device;
configuring a widget, based on the battery information about the at least one external electronic device and the action; and
displaying the widget on a display.

9. The operating method of claim 8, comprising:
obtaining battery information about a first external electronic device from the first external electronic device through a communication module with respect to the first external electronic device directly connected to the electronic device through the communication module;
obtaining battery information about a second external electronic device from a server through the communication module with respect to the second external electronic device connected to the server; and
obtaining battery information about a third external electronic device from an application with respect to the third external electronic device connected to the application.

10. The operating method of claim 9, comprising
determining the action to control the at least one external electronic device in response to the available time of the at least one external electronic device being a specified time or less,
wherein the action is an action to reduce battery consumption of the at least one external electronic device.

11. The operating method of claim 10, wherein the action comprises at least one of a switch to a power saving mode, battery optimization, deactivation of active noise cancellation, and analysis of an optimal charging method, and
wherein the widget comprises at least one of a title, an icon corresponding to the at least one external electronic device, a name of the at least one external electronic device, a battery level chart of the at least one external electronic device, a battery level percentage of the at least one external electronic device, an icon related to charging, left and right markers of the at least one external electronic device, guidance on an optimal charging method, and the available time.

12. The operating method of claim 8, comprising
displaying information related to a battery of the at least one external electronic device on the widget, based on a specified priority of the at least one external electronic device.

13. The operating method of claim 8, comprising
displaying a screen related to information about the at least one external electronic device on the display in response to a user input of selecting the widget displayed on the display,
wherein the screen related to the information about the at least one external electronic device comprises an action to reduce battery consumption of the at least one external electronic device.

14. The operating method of claim 11, comprising
displaying battery information about a fourth external electronic device on the widget in response to reception of a UWB signal of the fourth external electronic device through a UWB module, and
further comprising identifying the fourth external electronic device positioned in a direction of the electronic device through the UWB module in response to a change in the direction and obtaining the battery information from the fourth external electronic device through the UWB signal.

15. A computer-readable recording medium storing a program to execute the operating method of the electronic device of any of claims 8 to 14.
